# EUROPÄISCHE PATENTANMELDUNG

(11) **EP 1 357 089 A2**
(43) Veröffentlichungstag der Anmeldung: **29.10.2003**
(21) Anmeldenummer: 03008661.5
(22) Anmeldetag: 15.04.2003
(51) Int. Cl.: C03B 13/08, C03B 13/16

(54) **Verfahren und Vorrichtung zum Beschriften von Glas mittels einer Prägewalze, und mit Beschriftung versehenes Glas**

(30) Priorität: 22.04.2002 DE 10217965
(71) Anmelder: GLASFABRIK LAMBERTS GMBH & CO. KG, 95632 Wunsiedel (DE)
(72) Erfinder: Lamberts, Christoph, D-95632 Wunsiedel (DE)
(74) Vertreter: Kastel, Stefan Dipl.-Phys.

(57) **Zusammenfassung**

Die Erfindung betrifft ein Verfahren zum Versehen von Glas, insbesondere Bauglas, mit Beschriftungen (11) und/oder Symbolen (12), wie insbesondere Markenzeichen. Um ein beschriftetes Glas mit hohem Lichteintrag, besonderen Lichteffekten und hoher Dauerfestigkeit zu schaffen, wird erfindungsgemäß die folgende Reihenfolge von Schritten vorgeschlagen:
a) Herstellen einer Prägewalze (6) zum Prägen von Glas (2, 10, 13), deren Mantelfläche mit wenigstens ein Positiv- oder Negativabbild (8, 9) der einzubringenden Beschriftung bzw. des wenigstens einen einzubringenden Symbols bildenden Vertiefungen und/oder Erhebungen versehen wird,
b) Verwenden dieser Prägewalze (6) als Musterwalze bei der Herstellung von gewalztem Glas (10, 13).
Außerdem betrifft die Erfindung eine Vorrichtung zur Durchführung dieses Verfahrens und ein damit beschriftetes Glas.

## Beschreibung

Die Erfindung betrifft ein Verfahren und eine Vorrichtung zum Versehen von Glas, insbesondere Bauglas, mit Beschriftungen und/oder Symbolen, wie insbesondere Markenzeichen. Außerdem betrifft die Erfindung ein mit einer Beschriftung und/oder wenigstens einem Symbol versehenes Glas.

Die Erfindung hat sich zur Aufgabe gestellt, ein Beschriftungsverfahren und eine Beschriftungsvorrichtung sowie ein damit beschriftetes Glas zu schaffen, mit denen sich große Mengen identisch beschrifteter Gläser, insbesondere Flach- oder Profilgläser, wirtschaftlich herstellen lassen. Außerdem soll das beschriftete Glas hohe Lichttransmission, ein neuartiges und neuartige Lichteffekte, hohe Oberflächenfestigkeit und Dauerhaftigkeit aufweisen.

Zum Lösen dieser Aufgabe ist ein Verfahren zum Versehen von Glas- insbesondere Bauglas, mit Beschriftungen und/oder Symbolen, wie insbesondere Markenzeichen gekennzeichnet durch die folgende Reihenfolge von Schritten:
a) Herstellen einer Prägewalze zum Prägen von Glas, deren Mantelfläche mit wenigstens ein Positiv- oder Negativabbild der einzubringenden Beschriftung bzw. des wenigstens einen einzubringenden Symbols bildenden Vertiefungen und/oder Erhebungen versehen wird, und
b) Verwendung dieser Prägewalze als Musterwalze bei der Herstellung von gewalztem Glas.

Außerdem sieht die Erfindung ein mit einer Beschriftung und/oder wenigstens einem Symbol versehenes Glas vor, das dadurch gekennzeichnet ist, dass die Beschriftung und/oder dass wenigstens eine Symbol in die Glasoberfläche eingeprägt, insbesondere eingewalzt sind.

Schließlich schlägt die Erfindung zum Lösen der genannten Aufgabe eine Vorrichtung zum Versehen von Glas, insbesondere Bauglas, mit Beschriftungen und/oder Symbolen, wie insbesondere Markenzeichen, vor, die dadurch gekennzeichnet ist, dass sie als Vorrichtung zum Herstellen von gewalztem Glas ausgebildet ist und wenigstens eine mit wenigstens einem als Relief auf der Mantelfläche ausgebildeten Negativ- oder Positivabbild einer einzubringenden Beschriftung und/oder eines einzubringenden Symbols versehene Prägewalze aufweist.

Erfindungsgemäß wird also die Beschriftung oder die Symbole - das können insbesondere Markenzeichen sein - nicht nachträglich auf die Glasoberfläche aufgebracht, sondern bereits bei der Herstellung des Glases, während das Glas noch formbar ist, eingeprägt. Hierzu wird eine Prägewalze verwendet, die die einzubringende Beschriftung oder das einzubringende Symbol als Profilierung auf ihre Manteloberfläche aufweist. Die Prägewalze lässt sich insbesondere wie eine Musterwalze bei üblichen Walzverfahren einsetzen.

Als Ergebnis erhält man ein Glas, in dessen Glasoberfläche die Beschriftung oder die Symbole eingeprägt sind. Dies kann dadurch geschehen, dass die Schrift oder das Symbol selbst durch entsprechend geformte Erhebungen oder Vertiefungen in der Glasoberfläche ausgebildet sind. Andererseits könnte die Schrift oder das Symbol selbst auch flach auf einem mit vielen dicht gedrängten Erhebungen und/oder Vertiefungen geprägten Hintergrund ausgebildet sein. Die Beschriftung des Glases erfolgt beispielsweise analog zur Herstellung eines Ornamentglases mit der Beschriftung bzw. dem Symbol (z. B. Logo) als Ornament oder (wesentlicher) Bestandteil eines Ornaments.

Dadurch, dass die Schrift während der Herstellung eingeprägt wird, ergeben sich viele Vorteile. So wird das Glas durch die Beschriftung nicht abgedunkelt oder abgedeckt. Die Lichttransmission ist dadurch sehr hoch. Außerdem ergibt die reliefartige Struktur der Beschriftung je nach Lichteinfall oder Betrachtungswinkel einen unterschiedlichen Lichteffekt. Die Oberfläche des Glases wird durch das Beschriftungsverfahren nicht geschwächt, die Oberflächenfestigkeit bleibt erhalten. Wird das Glas beispielsweise in Wintergärten, bei der transparenten Wärmedämmung oder bei Gewächshäusern eingesetzt, so ist der Energieeintrag gegenüber bisher bekannten beschrifteten Gläsern wegen der erhöhten Lichttransmission größer.

Durch den Einsatz eines Walzverfahrens lasse sich beliebige Längen von Gläsern herstellen. Dabei wird aufgrund der Prägewalze die Beschriftung regelmäßig ohne Mehraufwand wiederholt.

Vorteilhafte Ausgestaltungen der Erfindung sind Gegenstand der Unteransprüche.

Der Lichteffekt der Beschriftung lässt sich durch Auswahl der Profilierung der Vertiefungen oder Erhebungen beeinflussen. So könnten die Erhebungen oder Vertiefungen halbrundförmig oder verschieden polygonzugförmig geformt sein. Besteht die Schrift z. B. aus durch Dreieckprofile geformten Erhebungen auf der Glasoberfläche, so ergibt sich ein ganz anderes Bild gegenüber durch halbrundförmige Vertiefungen gebildeten Schriftzeichen. Hierdurch entstehen ganz neue Gestaltungsmöglichkeiten.

Die Beschriftungen können in der richtigen Schreibweise oder spiegelverkehrt auf das Glas eingebracht werden. Das Einbringen von spiegelverkehrten Schriftzügen hat den Effekt, dass die beschriftete Seite von einem Betrachter abgewandt angeordnet werden kann.

Die Vorrichtung kann aus beliebigen Vorrichtungen zum Herstellen von Walzglas oder Ornamentglas gebildet werden, indem eine Walze oder sonstige Einrichtung zum Einprägen von Ornamenten durch eine mit entsprechenden Beschriftungswalzen oder Beschriftungsprägemitteln ersetzt werden.

Die Herstellung der Beschriftungsprägewalzen kann wie die Herstellung von Musterwalzen für Ornamentglas erfolgen. Es wäre aber auch denkbar, eine Walze mit Aufnahme von entsprechend bogenförmig ausgebildeten Druckstöcken oder Drucklettern zu versehen. Auch Prägetische mit Druckstöcken oder Drucklettern, auf denen das Glas ausgewalzt wird, sind denkbar.

Das Verfahren ist beispielsweise einsetzbar zum Beliefern von Markenherstellern mit mit den entsprechenden Markenlogos versehenen Gläsern zum Ausstatten von Fertigungsbetrieben, Büros, Niederlassungen und/oder Vertriebsorganisationen. Durch die Gläser lassen sich neuartige Glasarchitekturen hoher Symbolik erstellen.

Das Vorgehen wäre dabei derart, dass beispielsweise auf Auftrag des Markenherstellers dessen Markenlogo in oder auf eine Prägewalze aufgebracht wird und damit eine entsprechende Menge an Bauglas hergestellt wird.

Das erfindungsgemäße Glas kann in Form von Tafeln, Scheiben und Platten oder sonstigem Flachglas oder auch in U-Profilform oder L-Profilform hergestellt werden. Bei letzterem erfolgt vor oder nach dem Prägen noch eine entsprechende Profilierung mittels Umformwalzen. Das Glas lässt sich als gewalztes Glas oder als Spiegelglas herstellen. Die Herstellung kann als Gussglas in einzelnen Posten unterbrochen gewalzt, sei es nach dem Tischwalzverfahren durch Auswalzen, z. B. mit der Prägewalze, auf einem Gießtisch bzw. nach dem Maschinenwalzverfahren zwischen Walzenpaaren und eventuellen nachfolgender Prägung oder auch fortlaufend nach dem Wannenwalzverfahren (Gießverfahren zwischen Walzenpaaren) erfolgen. Die Oberflächen lassen sich ähnlich wie Spiegelglas durch Schleifen und Polieren nachbearbeiten, auch um weitere besondere Effekte herauszuarbeiten.

Weitere Gestaltungsmöglichkeiten wären das Einbringen von Giessmitteln in die geprägte Strukturen. Diese könnten Farbmittel oder andere Brechungsindizes als das verwendete Glas aufweisen.

Ausführungsbeispiele der Erfindung werden nachfolgend anhand der hier beigefügten Zeichnungen näher erläutert. Darin zeigt
- Fig. 1: eine perspektivische schematische Ansicht einer Vorrichtung zum Herstellen von gewalztem Glas und zum Versehen des Glases mit Beschriftungen und/oder Symbolen;
- Fig. 2: eine Draufsicht auf ein mit einer Vorrichtung gemäß Fig. 1 herstellbares scheibenförmiges Glas; und
- Fig. 3 - 9: verschiedene perspektivische Schnittansichten eines Teilstückes eine beschrifteten Glases entlang der Linie III - III von Fig. 2 in verschiedenen Ausführungsformen.

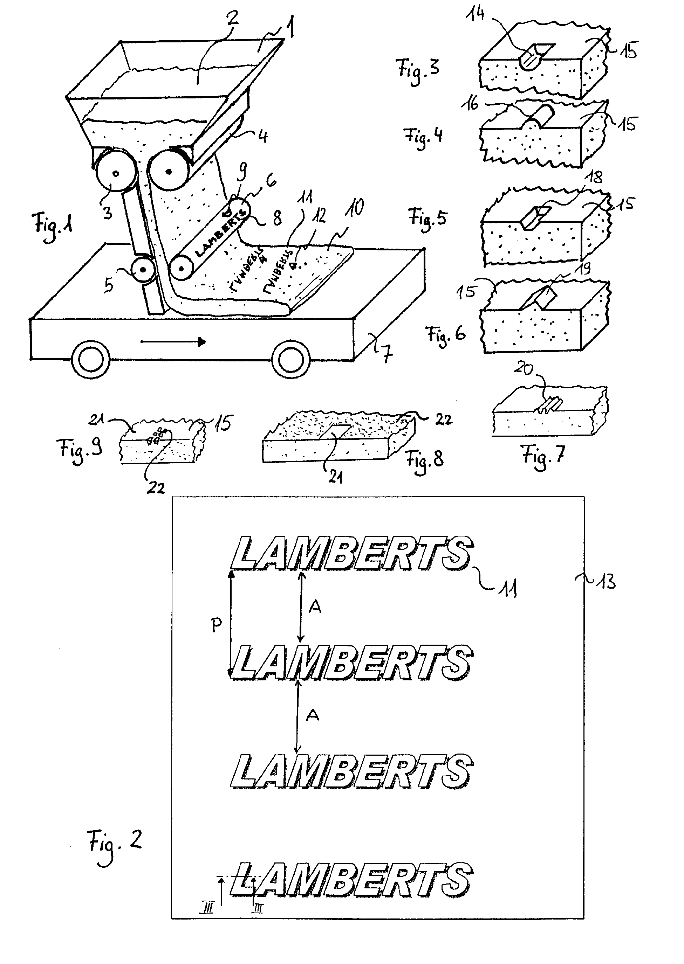

Fig. 1 zeigt eine Vorrichtung zur Glasherstellung im Walzverfahren. Diese Vorrichtung ist gleichzeitig als Vorrichtung zum Beschriften des hergestellten Glases und/oder zum Versehen desselben mit Symbolen wie Markenlogos ausgebildet. Die Vorrichtung weist einen Schmelzofen oder einen Behälter 1 zur Aufnahme einer Glasschmelze 2, zwei Walzenpaare 3, 4 und 5, 6 sowie einen Fahrtisch 7 auf.

Die Glasschmelze 2 wird dem Behälter 1 entnommen und zwischen dem ersten Walzenpaar 3, 4 zu einem Band vorgeformt und dem zweiten Walzenpaar 5, 6 zugeleitet. Wenigstens eine der Walzen 5, 6 des zweiten Walzenpaares ist als Prägewalze 6 ausgebildet, die auf ihrer Prägefläche ein Abbild einer in das Glas als Prägung einzubringenden Beschriftung oder eines in das Glas als Prägung einzubringenden Symbols aufweist. In dem hier dargestellten Beispiel weist die Prägewalze 6 ein Positivabbild eines aufzubringenden Markennamens 8 und eines Markenlogos 9 auf. Diese Positivabbilder 8, 9 werden dadurch spiegelverkehrt in das der Glasschmelze 2 entnommene Glasband 10 eingeprägt, wie dies bei 11 und 12 angedeutet ist. Die in die Glasoberfläche eingeprägte Beschriftung 11 und das in die Glasoberfläche eingeprägte Symbol 12 wiederholen sich entsprechend dem Durchmesser der Prägewalze 6. Die in der Ausführung gemäß Fig. 1 spiegelverkehrt angebrachten Beschriftungen 11 und Symbole 12 können nach Fertigstellung der Glastafel von der Rückseite her richtig gelesen werden. Beispielsweise Abmessungen für die Prägewalze 6 sind ein Durchmesser von 20 bis 120 cm, insbesondere ca. 60 cm und eine Länge von 1 bis 3 m, insbesondere ca.2 m.

Nach dem Einprägen wird das Glasband 10 auf dem Fahrtisch 7 abgelegt und der bei Walzverfahren üblichen Weiterverarbeitung zugeführt.

Zur Beschriftung des Glases wurde zuvor die Prägewalze 6 gemäß Kundenwunsch mit den Abbildern des Markennamens 8 und des Markenlogos 9 versehen hergestellt. Hierzu wird ihre Prägeoberfläche mit entsprechenden Erhebungen oder Vertiefungen versehen.

Fig. 2 zeigt eine durch Walzverfahren hergestellte und beschriftete Glasscheibe 13. Die Beschriftung 11 ist mehrfach in gleichbleibenden Perioden P, die dem Umfang der Prägewalze 6 entsprechen, wiedergegeben. Die einzelnen Schriftzüge sind demgemäss jeweils gleich mit dem Abstand A beabstandet. Bei dem Ausführungsbeispiel gemäß Fig. 2 ist die Schrift nicht spiegelverkehrt, sondern in der richtigen Schreibweise in die Glasoberfläche 15 eingeprägt. Entsprechend weist die Prägefläche der entsprechenden Prägewalze ein Negativabbild der Beschriftung 11 auf.

In einer nicht dargestellten Ausführungsform ist die Beschriftung 11 nicht senkrecht zur Wiederholrichtung, sondern schräg oder längs dazu angeordnet. Bei Längsanordnung lässt sich mit dem hier beschriebenen Verfahren auch eine Endlosfolge aus aneinandergereihten Buchstaben bilden.

Die Fig. 3 bis 9 zeigen Schnitte entlang der Linie III - III von Fig. 2 durch einen Buchstaben der Beschriftung 11, um verschiedene Ausführungsformen der Beschriftung 11 zu verdeutlichen.

Bei Fig. 3 ist die Beschriftung durch trogförmige Vertiefungen 14 in die Glasoberfläche 15 gebildet. Die Vertiefung 14 ist dabei bogenförmig profiliert.

Bei Fig.4 sind die Buchstaben und Symbole durch wallförmige Erhebungen 16 gebildet, die sich mit bogenförmiger Profilierung von der Glasoberfläche 15 erheben.

Bei dem Ausführungsbeispiel gemäß Fig. 5 ist der Buchstabe durch eine Vertiefung 18 mit trapezförmigem Profil gebildet. Selbstverständlich ist auch eine entsprechende Erhebung denkbar.

In Fig. 6 ist eine Erhebung 19 mit dreieckförmigem Profil dargestellt. Insbesondere, wenn dieses ungleichschenklig ist, sind die Lichteffekte je nach Seite des Beobachters unterschiedlich.

Bei Fig. 7 ist der Buchstabe durch eine Kombination von Vertiefungen und Erhebungen gebildet. In der hier dargestellten Form weist der beschriftete Bereich ein wellenförmiges Profil 20 auf.

Bei der Darstellung von Fig. 8 ist der beschriftete Bereich selbst als glatter Bereich 21 in einer aus Erhebungen und Vertiefungen gebildeten eingeprägten Strukturierung 22 gebildet.

Bei Fig. 9 bildet die eingeprägte Strukturierung 22, hier gebildet durch punktförmige Vertiefungen und/oder Erhebungen, das Schriftbild, wobei die übrigen Glasoberfläche 15 als glatter Bereich 21 ausgebildet ist.

Es ist klar, dass sich die entsprechenden Prägestrukturen auf der Prägewalze 6 unmittelbar als Negativabdruck der in den Fig. 3 - 9 gezeigten Glasoberflächenstrukturen ergeben.

## Patentansprüche

1. Verfahren zum Versehen von Glas, insbesondere Bauglas, mit Beschriftungen (11) und/oder Symbolen (12), wie insbesondere Markenzeichen,
**gekennzeichnet durch** die folgende Reihenfolge von Schritten:
a) Herstellen einer Prägewalze (6) zum Prägen von Glas (2, 10, 13), deren Mantelfläche mit wenigstens ein Positiv- oder Negativabbild (8, 9) der einzubringenden Beschriftung bzw. des wenigstens einen einzubringenden Symbols bildenden Vertiefungen und/oder Erhebungen versehen wird,
b) Verwenden dieser Prägewalze (6) als Musterwalze bei der Herstellung von gewalztem Glas (10, 13).

2. Verfahren nach Anspruch 1,
**dadurch gekennzeichnet,**
**dass** die das wenigstens eine Positiv- oder Negativabbild (8, 9) bildenden Erhebungen und/oder Vertiefungen ein bogenförmiges oder polygonzugförmiges Profil aufweisen.

3. Mit einer Beschriftung (11) und/oder wenigstens einem Symbol (12) versehenes Glas (10, 13),
**dadurch gekennzeichnet,**
**dass** die Beschriftung (11) und/oder das wenigstens eine Symbol (12) in die Glasoberfläche eingeprägt, insbesondere eingewalzt, sind.

4. Glas nach Anspruch 3,
**dadurch gekennzeichnet,**
**dass** die Beschriftung (11) und/oder das wenigstens eine Symbol (12) spiegelverkehrt eingewalzt sind.

5. Glas nach einem der Ansprüche 3 oder 4,
**dadurch gekennzeichnet,**
**dass** die Beschriftung (11f) und/oder das wenigstens eine Symbol (12) durch Vertiefungen (14,18) und/oder Erhebungen (16, 19) auf der Glasoberfläche (15) gebildet werden oder durch glatte Bereiche (21) zwischen eingeprägten Strukturierungen (22).

6. Glas nach einem der voranstehenden Ansprüche,
**gekennzeichnet durch** mehrere identische, gleich beabstandete Beschriftungen (11) und/oder Symbole (12).

7. Glas nach einem der voranstehenden Ansprüche,
**dadurch gekennzeichnet,**
**dass** die Beschriftung (11) und/oder das Symbol ein eingeprägtes Muster des Glases bilden oder Teil eines eingeprägten Musters sind.

8. Vorrichtung zum Versehen von Glas (2, 10, 13), insbesondere Bauglas, mit Beschriftungen (11) und/oder Symbolen (12), wie insbesondere Markenzeichen,
**dadurch gekennzeichnet,**
**dass** sie als Vorrichtung zum Herstellen von gewalztem Glas ausgebildet ist und wenigstens eine mit wenigstens einem als Relief auf der Mantelfläche ausgebildeten Negativoder Positivabbild (8, 9) einer einzubringenden Beschriftung (11) und/oder eines einzubringenden Symbols (12) versehene Prägeeinrichtung, insbesondere Prägewalze (6), aufweist.

9. Vorrichtung nach Anspruch 8,
**dadurch gekennzeichnet,**
**dass** die Prägewalze (6) eine Länge von ca. 1 bis 3 m und einen Durchmesser von ca. 20 bis 120 cm hat,
**dass** die Prägewalze (6) mehrere auf ihrer Länge verteilte Positiv- oder Negativabbilder von Beschriftungen und/oder Symbolen trägt und/oder
**dass** das wenigstens eine Positiv- oder Negativabbild (8, 9) durch Vertiefungen und/oder Erhebungen auf der Walzenoberfläche gebildet ist, deren Profil entsprechend der beim hergestellten Glas (10, 13) gewünschten Lichteffekte ausgewählt ist.
